# EUROPÄISCHE PATENTSCHRIFT

(11) **EP 0 455 117 B1**
(45) Veröffentlichungstag und Bekanntmachung des Hinweises auf die Patenterteilung: **21.12.1994**
(21) Anmeldenummer: 91106564.7
(22) Anmeldetag: 24.04.1991
(51) Int. Cl.: B01D 25/12, B01D 25/26

(54) **Schlammentwässerungspresse**
dehydration press for mud
presse de déshydratation pour des boues

(30) Priorität: 28.04.1990 DE 4013786
(43) Veröffentlichungstag der Anmeldung: 06.11.1991
(73) Patentinhaber: G. SIEMPELKAMP GmbH & Co., 47803 Krefeld (DE)
(72) Erfinder: Bott, Reinhard, Dr.-Ing., W-7517 Waldbronn (DE); Kern, Robert, Dr.-Ing., W-7504 Weingarten (DE); Langeloh, Thomas, Dr.-Ing., W-6913 Mühlhausen (DE); Gross, Holger, Dipl.-Ing., W-6729 Wörth 2 (DE)
(74) Vertreter: Andrejewski, Walter

(56) Entgegenhaltungen:
- EP-A- 0 100 270
- EP-A- 0 337 218
- BE-A- 884 951
- US-A- 4 892 665

## Beschreibung

Die Erfindung eine Schlammentwässerungspresse mit einer Schlammaufnahmekammer und einen darin geführten Preßkolben zur Erzeugung des Entwässerungspreßdruckes zum Entwässern eines Schlammvolumens, wobei in dem Schlammvolumen flexible, als Flächengebilde ausgeführte Trennstränge angeordnet sind, die die Schlammaufnahmekammer durchqueren und das Schlammvolumen in autodraine Volumenbereiche aufteilen, wobei die Trennstränge aus äußeren Feststoff-Rückhalteschichten und zumindest einer von den Feststoff-Rückhalteschichten abgedeckten Filtratabführschicht bestehen sowie, dadurch gleichzeitig Drainagestränge sind. - Entwässerbare Schlämme sind insbesondere Abwasserschlämme, wie Klärschlämme aus biologischen Abwasserreinigungsanlagen, aber auch sogenannte Hydroxid-schlämme und Schlämme mit Fett sowie mit eiweißhaltigen Bestandteilen. Die letztgenannten Schlämme entstehen z. B. bei der Lebensmittelherstellung. Andere Schlämme fallen in galvanotechnischen Betrieben an.

Bei einer Schlammentwässerungspresse der eingangs beschriebenen Gattung (EP-A2-0 337 218) sind die flächigen Trennstränge quer zur Verdichtungsrichtung angeordnet. Der Schlammkuchen bzw. die Schichten des Schlammkuchens, die nach der Entwässerung anfallen, sind je nach Größe und Ausführung der Schlammentwässerungspresse nicht ohne Probleme zu manipulieren bzw. zu entsorgen.

Bekannt ist auch eine Schlammentwässerungspresse (BE-A-884 951), bei der die Trennstränge nicht flächig, sondern linienförmig ausgebildet sind und als Drainagestränge funktionieren. Diese Trennstränge sind am Preßkolben befestigt und erstrecken sich in Verdichtungsrichtung. Sie besitzen eine innere Armierung, die hauptsachlich dazu dient, die Drainagefunktion aufrechtzuerhalten. Beim Verdichten werden diese Trennstränge unkontrollierbar verformt, so daß weder die Größe von Teilen des Schlammkuchens noch deren Dicke steuerbar ist.

Der Erfindung liegt die Aufgabe zugrunde, eine gattungsgemäße Schlammentwässerungspresse so zu verbessern, daß der entwässerte Schlammkuchen auf einfache Weise entsorgt werden kann.

Diese Aufgabe wird dadurch gelost, daß die Trennstränge an den Preßkolben angeschlossen sind und die Schlammaufnahmekammern in Verdichtungsrichtung durchqueren, und daß die Trennstränge mit Sollfaltausbildungen versehen sind sowie durch die Bewegung des Preßkolbens faltbar und streckbar sind. Beim Betrieb der Schlammentwässerungspresse wird das Schlammvolumen im Inneren durch die Trennstränge so aufgetrennt und aufgeteilt, daß die Volumenbereiche bei der Verdichtung dünne Schlammkuchen bilden, die auch bei höheren Entwässerungspreßdrücken entwässerungsfähig bleiben. Dieses Aufteilen heißt im Rahmen der Erfindung Aufteilen in autodraine Volumenbereiche. Man kommt so zu einer wesentlichen Verbesserung der Entwässerung.

Der Entwässerungsgrad kann mit zunehmendem Entwässerungspreßdruck sehr weit getrieben werden. Von besonderem Vorteil ist die Tatsache, daß der durch die Verdichtung entstehende Schlammkuchen nach der Entwässerung durch die Trennstränge aufgebrochen wird. Dazu ist es lediglich erforderlich, die Trennstränge wieder zu strecken oder aus dem Schlammkuchen herauszuziehen. Die Trennstränge sind folglich wiederverwendbar. Sie bleiben in der Schlammentwässerungspresse. Es versteht sich, daß die Trennstränge vor einem erneuten Einsatz, z. B. durch Abspritzen, Abbürsten oder dergleichen Maßnahmen gereinigt werden können. Die Abstände und die Anordnung der Trennstränge kann unter Berücksichtigung der gegebenen Umstände eingerichtet werden. Insbesonders besteht die Möglichkeit, so vorzugehen, daß in dem Schlammvolumen durch die Trennstränge schichtförmige Volumenbereiche gebildet werden. Diese Volumenbereiche können so gebildet werden, daß sie über Abstandszwischenräume zwischen den Trennsträngen kommunizieren. Für sehr viele Anwendungsfälle und insbesondere für schwerentwässerbare Schlämme kommt man zu einem guten Entwässerungsergebnis, wenn die Trennstränge mit Abstandsparametern und mit einer Verteilungsstruktur angeordnet werden, die sicherstellen, daß die autodrainen Volumenbereiche im entwässerten Schlammkuchen eine Dicke oder einen Durchmesser von unter 5 mm aufweisen. Vorzugsweise werden die Abstandsparameter und die Verteilungsstruktur sogar so gewählt, daß die autodrainen Volumenbereiche eine Dicke oder einen Durchmesser von unter 3 mm aufweisen.

Im Rahmen der Erfindung kann mit Entwässerungspreßdrücken von über 10 bar gearbeitet werden. Es kann aber ohne Schwierigkeiten auch mit höheren Preßdrücken gearbeitet werden. Insbesondere besteht die Möglichkeit, das Schlammvolumen mit den darin angeordneten Trennsträngen mit einem Entwässerungspreßdruck von über 50 bar zum entwässerten Schlammkuchen zu verdichten. Auch wesentlich höhere Preßdrücke sind möglich, wenn ein sehr hoher Entwässerungsgrad erreicht werden soll.

Im Rahmen der Erfindung liegt es, die Feststoff-Rückhalteschichten einlagig oder mehrlagig aus einem Gewebe oder Gewirke aufzubauen. Die Filtratabführschicht in den Trennsträngen kann aus feinporigem Gewebe oder Gewirke bestehen.

Im folgenden werden die beschriebenen und weitere, die Schlammentwässerungspresse betreffende Merkmale der Erfindung anhand einer Zeichnung beispielhaft erläutert. Es zeigen
- Fig. 1: einen Ausschnitt aus einer erfindungsgemäßen Schlammentwässerungspresse im Bereich der Schlammaufnahmekammer,
- Fig. 2: eine Draufsicht auf den Gegenstand nach Fig. 1,
- Fig. 3: den Gegenstand nach Fig. 1 in anderer Funktionsstellung,
- Fig. 4: perspektivisch einen Ausschnitt aus einem Trennstrang einer erfindungsgemäßen Schlammentwässerungspresse,
- Fig. 5: einen Querschnitt durch eine andere Ausführungsform eines Trennstranges,
- Fig. 6: den Gegenstand nach Fig. 5 in anderer Funktionsstellung,
- Fig. 7: einen Querschnitt durch eine weitere Ausführungsform eines Trennstranges und
- Fig. 8: den Gegenstand nach Fig. 7 in anderer Funktionsstellung.

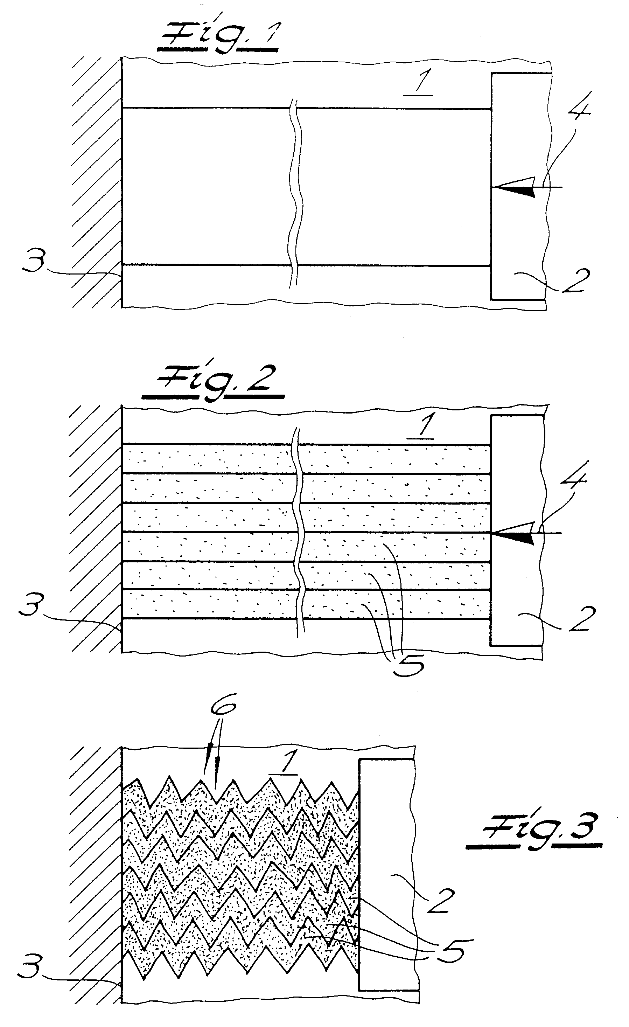

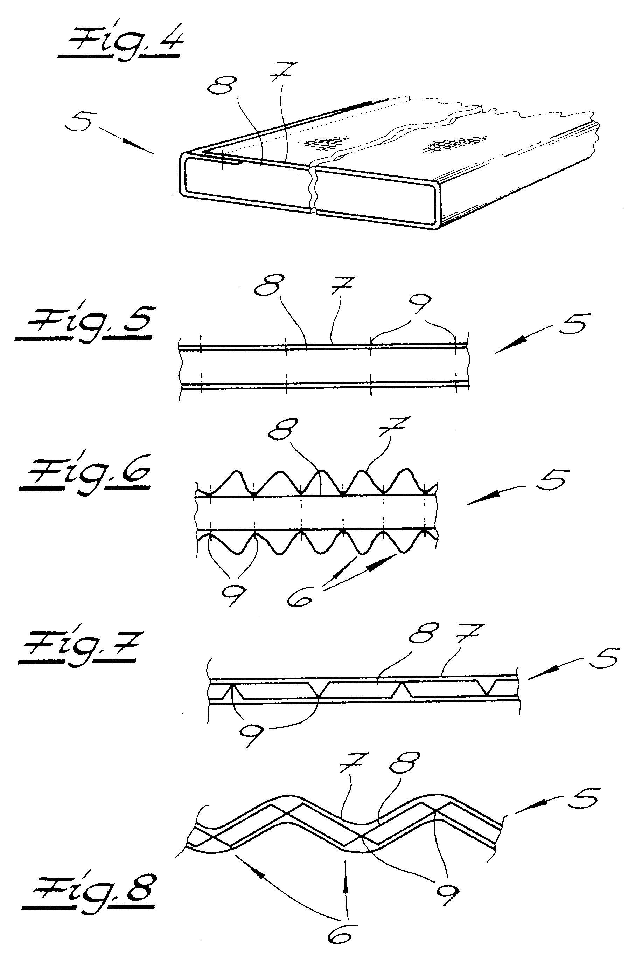

Die in den Fig. 1 bis 3 ausschnittsweise dargestellte erfindungsgemäße Schlammentwässerungspresse besitzt eine Schlammaufnahmekammer 1 und einen darin geführten Pressenkolben 2 für die Erzeugung des Entwässerungspreßdruckes. Die Schlammaufnahmekammer 1 besitzt in den Fig. 1 bis 3 links eine feste Kammerwand 3 und rechts den beweglichen Pressenkolben 2, dessen Bewegungsrichtung durch einen Pfeil 4 angedeutet worden ist. Aus einer vergleichenden Betrachtung der Fig. 1 bis 3 entnimmt man, daß in dem Schlammvolumen, welches in die Schlammaufnahmekammer 1 eingebracht worden ist, Trennstränge 5 angeordnet sind, die das Schlammvolumen in autodraine Volumenbereiche aufteilen. Das Schlammvolumen ist unter flexibler Verformung der darin angeordneten Trennstänge 5 durch Bildung von Faltungen 6 mit einem Entwässerungspreßdruck zu einem entwässerten Schlammkuchen zu verdichten. Dazu wird auf die Fig. 3 verwiesen. Im allgemeinen wird mit einem Entwässerungspreßdruck von über 10 bar gearbeitet. Wird der Pressenkolben 2 aus der Stellung, die in Fig. 3 angedeutet wurde, in die Ausgangsstellung zurückbewegt, so wird der Schlammkuchen durch Strecken der Trennstränge 5 aufgebrochen. - Im einfachsten Falle bestehen die Trennstränge 5 aus Fäden, Garnen, Schnüren, Seilen, textilen Bändern und dergleichen. Sie sind vorzugsweise aus Kunststoffilamenten, monofil oder multifil, aufgebaut.

Aus den Fig. 4 bis 8 entnimmt man, daß die Trennstränge 5 in besonderer Weise aufgebaut sind. Sie bestehen aus äußeren Feststoff-Rückhalteschichten 7 und zumindest einer von den Feststoff-Rückhalteschichten 7 abgedeckten Filtratabführschicht 8. Sie sind dadurch gleichzeitig als Drainagestränge ausgeführt. Darunter wird verstanden, daß in den Trennsträngen 5 das Filtrat gleichsam kanalartig geführt wird, wobei es nach Maßgabe der Druckdifferenz abgeführt wird, was nicht gezeichnet wurde.

Die Feststoff-Rückalteschichten 7 bestehen einlagig oder mehrlagig aus einem geeigneten Gewebe oder Gewirke. Es muß ausreichend dicht sein. Die Filtratabführschicht 8 in den Trennsträngen 5 besteht demgegenüber aus einem gleichsam feinporigen Gewebe oder Gewirke. Sie könnte auch aus Filamenten, vorzugsweise aus Monofilamenten bestehen.

Im Ausführungsbeispiel und nach bevorzugter Ausführungsform der Erfindung sind die Trennstränge 5 als Flächengebilde ausgeführt, die die Schlammaufnahmekammer 1 durchqueren und die an den Preßkolben 2 angeschlossen sowie durch dessen Bewegung in der Art und Weise, die in den Fig. 1 bis 3 erläutert worden ist, faltbar und streckbar sind. Die Trennstränge 5 sind mit Sollfaltausbildungen 9 versehen. Darunter werden Bereiche mit reduziertem Flächenträgheitsmoment verstanden, die auch filmgelenkartig ausgeführt sein können. Im Ausführungsbeispiel ist die Filtratabführschicht 8 mit diesen Sollfaltausbildungen 9 ausgerüstet. Die Feststoff-Rückhalteschichten 7 und die Filtratabführschicht 8 sind zweckmäßigerweise aus Kunststoffilamenten und/oder Kunststoffäden aufgebaut.

## Patentansprüche

1. Schlammentwässerungspresse mit einer Schlammaufnahmekammer (1) und einem darin geführten Preßkolben (2) zur Erzeugung des Entwässerungspreßdruckes zum Entwässern eines Schlammvolumens, wobei in dem Schlammvolumen flexible, als Flächengebilde ausgeführte Trennstränge (5) angeordnet sind, die die Schlammaufnahmekammer (1) durchqueren und das Schlammvolumen in autodraine Volumenbereiche aufteilen, wobei die Trennstränge (5) aus äußeren Feststoff-Rückhalteschichten (7) und zumindest einer von den Feststoff-Rückhalteschichten (7) abgedeckten Filtratabführschicht (8) bestehen und dadurch gleichzeitig Drainagestränge sind, **dadurch gekennzeichnet**, daß die Trennstränge (5) an den Preßkolben (2) angeschlossen sind und die Schlammaufnahmekammer (1) in Verdichtungsrichtung durchqueren, und daß die Trennstränge (5) mit Sollfaltausbildungen (9) versehen sind sowie durch die Bewegung des Preßkolbens (2) faltbar und streckbar sind.

2. Schlammentwässerungspresse nach Anspruch 1, dadurch gekennzeichnet, daß die Feststoff-Rückhalteschichten (7) einlagig oder mehrlagig aus einem Gewebe oder Gewirke aufgebaut sind.

3. Schlammentwässerungspresse nach einem der Ansprüche 1 oder 2, dadurch gekennzeichnet, daß die Filtratabführschicht (8) in den Trennsträngen (5) aus feinporigem Gewebe oder Gewirke besteht.

## Claims

1. A sludge dewatering press with a sludge receiver chamber (1) and a press piston (2) guided therein for producing the dewatering compaction pressure for dewatering a sludge volume, wherein flexible separating strips (5) constructed as flat formations are disposed in the sludge volume, which separating strips traverse the sludge receiver chamber (1) and divide the sludge volume into auto-draining volume regions, wherein the separating strips (5) consist of external solids retaining layers (7) and at least one filtrate discharge layer (8) covered by the solids retaining layers (7) and are thereby at the same time drainage strips, characterised in that the separating strips (5) are connected to the press piston (2) and traverse the sludge receiver chamber (1) in the direction of compaction, and that the separating strips (5) are provided with predetermined fold formations (9) and can be folded and extended by the movement of the press piston (2).

2. A sludge dewatering press according to claim 1, characterised in that the solids retention layers (7) are constructed as a single layer or in multiple layers from a woven or knitted fabric.

3. A sludge dewatering press according to either one of claims 1 or 2, characterised in that the filtrate discharge layer (8) in the separating strips (5) consists of a finepored woven or knitted fabric.

## Revendications

1. Presse de déshydratation de boues comprenant une chambre de réception de boues (1) dans laquelle est guidé un piston de compression (2) pour la production d'une pression pour la déshydratation d'un volume de boue dans lequel sont disposées des barres de séparation (5) flexibles conformées en structures planiformes qui traversent la chambre de réception de boues (1) et divisent le volume de boue en sections de volume auto-drainantes, les barres de séparation (5) étant constituées par des couches de retenue de matières solides (7) extérieures et par au moins une couche d'évacuation de filtrat (8) recouverte par les couches de retenue de matières solides (7), et formant ainsi en même temps des barres de drainage, caractérisée en ce que les barres de séparation (5) sont raccordées au piston de compression (2) et traversent la chambre de réception de boues (1) dans la direction de compression, et que les barres de séparation (5) présentent des zones de pliage imposées (9) et peuvent ainsi être pliées et dépliées par le mouvement du piston de compression (2).

2. Presse de déshydratation de bornes selon la revendication 1, caractérisée en ce que les couches de retenue de matières solides (7) sont constituées par une ou plusieurs couches de tissu ou de tricot.

3. Presse de déshydratation de boues selon l'une des revendications 1 ou 2, caractérisée en ce que la couche d'évacuation de filtrat (8) dans les barres de séparation (5) est constituée d'un tissu ou tricot à micropores.
